# EUROPEAN PATENT APPLICATION

(11) **EP 4 524 114 A1**
(43) Date of publication of application: **19.03.2025**
(21) Application number: 24196854.4
(22) Date of filing: 28.08.2024
(51) Int. Cl.: C03B 27/04

(54) **DEVICE AND METHOD FOR COOLING GLASS WITH AIR JETS**

(30) Priority: 15.09.2023 FI 20236028
(71) Applicant: Glaston Finland Oy, 33730 Tampere (FI)
(72) Inventor: Nurmi, Heikki, 33731 Tampere (FI); Vehmas, Jukka, 33731 Tampere (FI)
(74) Representative: LEITZINGER OY

(57) **Abstract**

A device and a method for temporarily decreasing the blowing width of a glass convection cooler based on the width of the glass to be cooled. In the convection cooler, glass is cooled by air jets. The primary purpose of decreasing the blowing width is to decrease the energy consumption of the convection cooler. In the device, the blowing width of several blowing boxes that are consecutive in the direction of the width of the glass is closed by the closing plates attached to the same shaft by changing their position by rotating the shaft passing through the consecutive blowing boxes. Blowing length can be closed, when a glass sheet to be cooled fits to the narrowed blowing width. Convection coolers included in the scope of the invention are used primarily in the tempering of glass sheets.

## Description

### BACKGROUND OF THE INVENTION

The invention relates to a device and a method for cooling glass with air jets. The invention relates in particular to the tempering cooling of glass with air jets.

The device of the invention is a glass sheet convection cooler composed of a glass sheet conveyor track, an air generation unit, air supply ducts, and, above and below the glass sheet to be cooled, a plurality of oblong blowing boxes that are consecutive in the direction of movement of the glass and transverse to the direction of movement of the glass. The air jets cooling the glass sheet are discharged towards the glass sheet to be cooled from blowing apertures in the blowing boxes. The glass sheet conveyor track is typically a roller track. The air generation unit is typically a blower, the overpressure, i.e. blowing pressure, created by which in the blowing boxes is typically, 500 - 40 000 Pa. The blowing pressure can be adjusted with a frequency converter by changing the rotational speed of the blower impeller.

Such glass sheet convection coolers are generally known and used in particular in glass sheet tempering lines. In these, the convection cooler is often called a glass tempering cooler. The electric motor of a tempering cooler blower is typically 100 - 400 kilowatts in power, and there are typically two blowers.

The general disadvantages of glass tempering convection coolers are the electricity consumption and high motor power of the air generation units, which increase as the thickness of the glass to be tempered decreases. Electricity consumption raises production expenses and increases carbon dioxide emissions. A larger blower and motor increase manufacturing expenses.

Often the width of the glass sheet or load of glass sheets to be tempered is essentially smaller than the blowing width of the convection cooler. In this case, a portion of the convection cooling is unnecessary, because a portion of the air jets are not directed onto the glass sheet. In convection coolers of the type described above, composed of consecutive oblong blowing boxes, the electricity consumption can be decreased by removing above said unnecessary blowing.

In the past, attempts have been made to obviate this disadvantage in many different ways.

In publication US4874418A, blow openings along the width of a glass tempering cooler are closed by pushing a barrier plate inwards as the loading width of the glass narrows. A disadvantage is that the barrier plate jams easily, because minimal clearances are required to prevent leaks impairing the tightness of the closure. It is also a disadvantage that this technique requires the movement of a barrier plate equal to the length of the narrowing of the loading width, i.e. it requires significantly more space to the side of the glass tempering cooler. The advantage is that, using this technique, stepless adjustment of the blowing width can be achieved.

In prior art publication US3522029A, openings along the width of the glass tempering cooler are closed by moving a barrier plate equipped with openings approximately and by at least the diameter of the nozzle opening as the glass loading width narrows. The advantage of this technique is that, in relation to the solution of publication US4874418A, it does not require as significantly much additional space to the side of the glass tempering cooler, because the required movement of the barrier plate is very short. The disadvantage in relation to the solution of publication US4874418A is that this technique enables only one narrowing step of the blowing width.

In publication EP3042881A1, the problem is solved by an air distribution part with a width the entire length of the blowing box, wherein the blowing boxes are divided into separate compartments by dividing walls, and the blowing into the edge compartments can be prevented by closing the hatch in the air distribution part. The disadvantage of this solution can be stated as the space required by the air distribution part and its connection ducts above and especially below the glass sheet. The solution significantly increases the price of the tempering cooler.

In prior art publication CN111620556A, unnecessary blowing is removed by closing the blowing box with partition wall-like guillotine-type valves. The technique enables the removal of unnecessary blowing width in several steps. As a disadvantage is the space required by the guillotine-type valves along with their actuators above and especially below the blowing boxes. On the underside, the functional reliability of a baffle plate of the guillotine is decreased by pieces of broken glass typically accumulating in the tempering cooler, where the guillotine actuators are located. Further, outside the blowing boxes, the baffle plate is in the open position at risk of striking pieces of glass and becoming dirty. This can easily lead to a baffle plate jamming problem. The adhesion and accumulation of glass dust in the moving parts of the device decreases their durability. A further disadvantage is the constant leaking of air out of the blowing boxes from the opening required by the movement of the baffle plate of the guillotine-type valves into the blowing box. Leaks significantly decrease the energy savings to be achieved.

With reference to the above-said prior solutions, the problem is to resolve the removal of unnecessary blowing with a device and a method that are technically reliable, cost-effective, fit into the existing structures and remove unnecessary blowing as effectively as possible.

### SUMMARY OF THE INVENTION

The object of the invention is to provide a glass sheet convection cooler, with which a significant portion of the air jet cooling that is not directed to the glass loads can, in the direction of the width of the glass and the glass load, be efficiently removed by a mechanical solution that is reliable, cost-effective and compact and to be placed into structures of the current type.

The object of the invention is achieved by a device for decreasing the blowing width of a glass convection cooler, wherein the convection cooler comprises, on both sides of the glass, blowing boxes that are consecutive in the direction of movement of the glass, from the blowing openings of which air is discharged towards the glass to be cooled. The device includes several closing plates within the consecutive blowing boxes and attached to the same shaft, and the shaft is arranged to pass through the consecutive blowing boxes by which the shaft is supported, and an actuator, with which the shaft can be rotated to prevent air from flowing into the end portion of the blowing boxes by the closing plates.

The object of the invention is also achieved by a method for temporarily decreasing the blowing width of a glass convection cooler based on the width of the glass to be cooled. The convection cooler is composed of, on both sides of the glass, blowing boxes that are consecutive in the direction of movement of the glass, from the blowing apertures of which air is discharged towards the glass to be cooled. In the method, the blowing length of several consecutive blowing boxes is shortened by the closing plates attached to the same shaft by changing their position by rotating the shaft passing through the consecutive blowing boxes.

The objects are achieved on the basis of the characterizing features set forth in the independent claims. Preferred embodiments of the invention are set forth in the dependent claims.

### DESCRIPTION OF THE FIGURES

In the following, the invention is described in more detail with reference to the accompanying drawings, in which:
Fig. 1 shows a cross-section of the glass convection cooler as viewed from the side
Fig. 2 shows a cross-section of a blowing box according to one embodiment of the invention as viewed from the direction of movement of the glass
Fig. 3 shows the consecutive blowing boxes of a glass convection cooler according to one embodiment of the invention
Fig. 4 shows the convection cooler of Fig. 3 as viewed from a different direction
Fig. 5 shows a closing plate along with its mechanisms of a device according to one embodiment of the invention

### DETAILED DESCRIPTION OF THE INVENTION

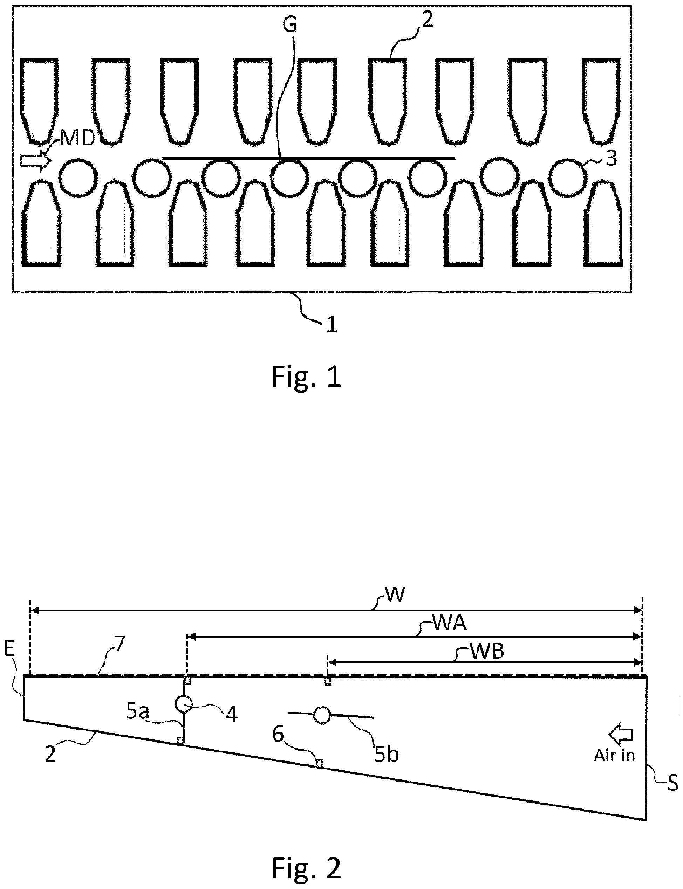

Fig. 1 shows a glass sheet G convection cooler 1, into which glass sheets are transferred from the heating furnace, which is typically a glass tempering furnace. From the glass tempering furnace, the glass sheets are transferred into the convection cooler, typically at a temperature of approximately 650°C from the direction of the arrow MD. Preferably, the convection cooler is a glass tempering cooler. The glass sheet moves in the convection cooler as conveyed by a roller track formed from rollers 3. The movement of the glass sheet in the convection cooler can be continuous, i.e. in one direction, or the glass sheet can move back and forth on the roller track. In Fig. 1, above and below the glass sheet G carried on the rollers 3 are blowing boxes 2. Air is fed into the blowing boxes by a blower. The blowing boxes 2 are equipped with blowing apertures 7, through which the air generated by the blower is discharged as a jet towards the glass sheet G. There are a plurality of blowing boxes that are consecutive in the direction of movement of the glass, and they are oblong and parallel with the rollers. The striking of the air jets on the glass sheet creates a cooling power, which cools the glass. It is a case of so-called forced convection cooling.

Fig. 2 shows one blowing box 2 below the glass as viewed from the direction of movement of the glass. The length of the blowing box is typically slightly greater than the length W of the blowing box that is equipped with blowing apertures 7, which is typically 1.2 - 3.4 metres. Air is fed into the blowing box from its first end (cf. Air in), i.e. from the starting end. Typically, the height of the blowing box decreases in the direction of air flow in the blowing box, i.e. as the distance from the first end increases towards the other end, i.e. the ending end. This decrease in height evens out the blowing pressure in the blowing apertures along the length of the blowing box. The starting end of the blowing box is marked in Fig. 2 with the letter S, and the ending end with the letter E. In Fig. 2, air is fed into the blowing box from its starting end S. The blowing box of Fig. 2 is equipped with two closing plates, 5a and 5b. In the figure, the closing plate 5b, at a distance WB from the beginning of the length equipped with blowing apertures, is in the open position, and the closing plate 5a, at a distance WA from the beginning of the length equipped with blowing apertures, is in the closed position. The closing plate 5a thus prevents air from flowing into the end portion of the blowing box. Hence, the closing plate 5a attempts to remove the blowing from the blowing apertures, which are located in the end portion of the blowing box, between lengths W and WA. Correspondingly, the closing plate 5b, when being in the closed position, would attempt to remove the blowing from the blowing apertures, which are located in the end portion of the blowing box, between lengths W and WB. In general, the end portion of the blowing box is thus, in the direction of air flow, the section of the blowing box downstream of the closing plate. The closing plates are attached to the shafts 4, which penetrate the sides of the blowing box. The shafts are straight, horizontal and parallel with the movement of the glass. The sides of the blowing box are the side walls of the blowing box, which are typically vertical. The blowing box further includes sealing parts 6, against which the edges of the closing plates are pressed as they are closed. Preferably, the sealing part covers the entire perimeter of the cross-section of the blowing box.

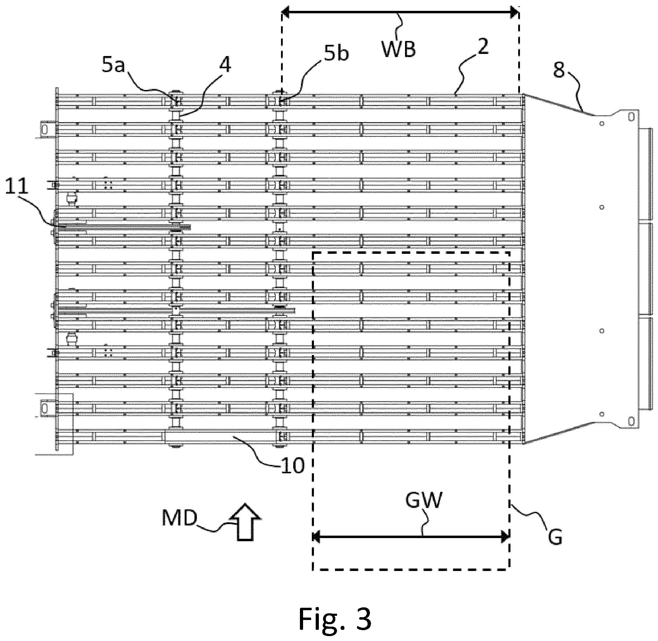

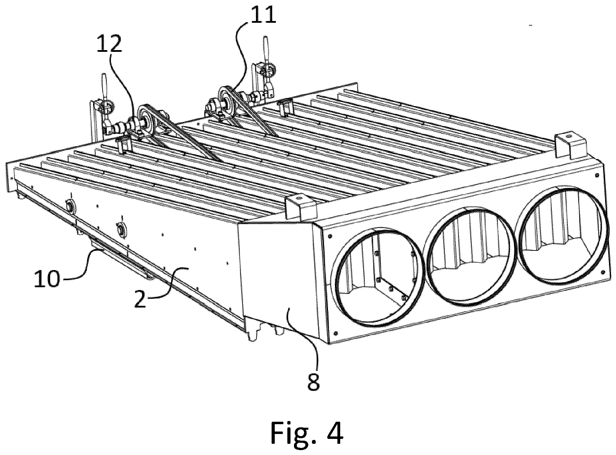

Figs. 3 and 4 show the blowing boxes on one side of the glass sheet convection cooler. The figures show the distribution duct 8, from which air is fed into several blowing boxes 2. Air enters the distribution duct from the blower via the supply ducts, which are not shown in the figures. The blowing box 2 includes a lid part 10 having the blowing apertures 7. In the view of the figures, the blowing boxes 2 are mostly opened, i.e. there is only a small portion of the lid part 10 in one blowing box. Typically, the lid part is a continuous part the length of the entire blowing box 2, which part is attached with screws and sealing compound to the frame of the blowing box. For the sake of clarity and simplification of the figures, Figs. 1, 2 and 5 do not specify the lid part in the nozzle box. In the blowing boxes of Fig. 3 are seen the closing plates 5a, 5b in two lines. The closing plates 5a are attached to a different shaft 4 than the closing plates 5b. The shaft 4 is arranged to pass through a plurality of blowing boxes that are consecutive in the direction of movement of the glass, by which blowing boxes the shaft is also supported. Figs. 3 and 4 show also belts 11, which are included in the closing plate actuators 12. The belt 11 is connected to a belt pulley mounted on the shaft such that the movement of the belt rotates the shaft. The belt may also be a chain or other type of transmission part between the shaft and the actuator. By rotating the shaft, i.e. by turning it in relation to its longitudinal axis approximately a ¼ rotation, the closing plates are guided into the open/closed position. Both shafts have their own belt and actuator. By means of the actuator 12, the shaft 4 can be rotated to prevent air from flowing into the end portion of the blowing boxes by the closing plates 5a, 5b. The actuator may be manually or mechanically operated. It may include an electric motor or a pneumatic machine. The actuator 12 is preferably arranged at the ending end of the blowing box. This is especially preferred below the glass, since due to the decreasing height of the above-said blowing box towards its end the actuator can be made further from the floor, and at the same time further from the bits of broken glass accumulating there. This then improves the reliability and durability of the actuator. The width GW of the glass sheet G of Fig. 3, i.e. the dimension transverse to the direction of entry MD of the glass, is less than the distance of the closing plates 5b from the beginning of the blowing box 2 area with blowing apertures (the dimension WB in Figs. 2 and 3). Hence, the closing plates 5b can be closed by rotating the shaft 4 to prevent air from flowing into the end portion of the blowing box, when the glass sheet is placed on the roller track like in Fig. 3, such that it does not extend to the closing plates 5b.

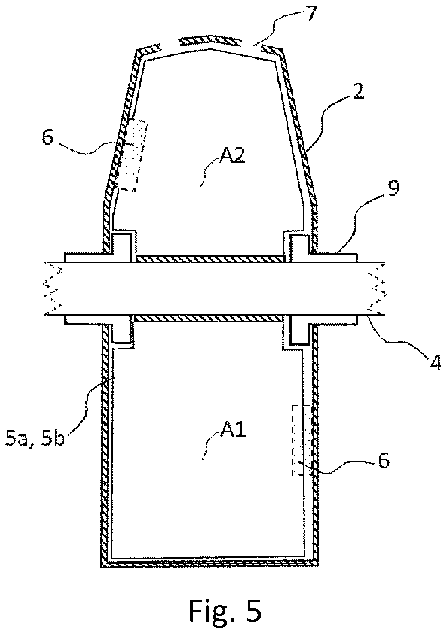

Fig. 5 shows a closing plate 5a, 5b in the blowing box 2 in more detail. In the figure, the closing plate is in the closed position. In Fig. 5, the closing plate is divided into two sub-areas A1 and A2 on both sides of the shaft. The surface area of the sub-area A1 is larger than that of the sub-area A2. The surface area of the entire closing plate is the sum of the areas A1 and A2. Also seen in Fig. 5 is a bearing 9, by means of which the shaft is supported by the blowing box. The bearing in Fig. 5 is a slide bearing. The closing plate has a bushing, typically shaft-shaped and approximately the size of the outer diameter of the closing plate, through which bushing the shaft passes. The closing plates are fixedly attached to the shaft, for example, by a screw. In the view of Fig. 5, the sealing part 6 would surround approximately the entire perimeter of the cross-section of the blowing box, but for the sake of the clarity of the figure, it does not show more than two partial lengths of the sealing part 6. It is essential that the sealing part extends in the normal direction of the inner surface of the blowing box further from the inner surface of the blowing box than the clearance between the closing plate and the inner surface of the blowing box. A possible leak of the clearances of the contact surface of the sealing part and the closing plate can be decreased by coating the surface on the side of the sealing part of the closing plate and/or on the side of the closing plate of the sealing part with an elastic substance, for example, with rubber. Fig. 5 also shows the blowing apertures 7.

In Figs. 3 and 4, to the same shaft are attached the closing plates of 13 consecutive blowing boxes. Thus, by rotating one shaft, the blowing length of 13 blowing boxes can be closed at the same time. It is characteristic of the invention that to the same shaft are attached the closing plates of several consecutive blowing boxes, and preferably at least five. In a more preferred embodiment, this number is at least ten. The device becomes more simple and more cost-effective as the above-said number increases. Typically, a convection cooler has 10 - 100 consecutive blowing boxes on both sides of the glass, the spacing of which in the direction of movement of the glass is typically 70 - 140 mm. Between the consecutive blowing boxes is an air gap, from which the air that has already hit the surface of the glass is removed.

According to a preferred embodiment, the surface areas A1 and A2 of the sub-areas of the closing plate on both sides of the shaft are each at least a 1/3 portion of the entire surface area A1 + A2 of the closing plate. In this case, the shaft is located suitably in the middle of the closing plate.

In a preferred embodiment, the device is equipped with closing plate-specific sealing parts 6, against which the surface of the closing plate is pressed in the closed position, whereupon the closing plate section on the first side of the shaft presses against the sealing part from its opposite surface as the closing plate section on the other side of the shaft. The pressing of the closing plate against the sealing parts deceases leakage over the closing plate from the clearances of the closing plate and the inner surface of the blowing box. This increases the energy savings to be achieved by the device. The force pressing the closing plate against the sealing part can be created by an actuator 12.

According to one preferred embodiment, the surface area of the closing plate section on the first side of the shaft has a different size than the surface area of the closing plate section on the other side of the shaft, and the closing plate section with the larger surface area presses against the sealing part from its surface on the side of the ending end of the blowing box. In this case, the air pressure difference, which is formed in the blowing box between the different sides of the closed closing plate, also presses the closing plate against the sealing part. This ensures the function of the device and keeps the closing plate tightly against the sealing part also in the absence of a force created by the above-said actuator.

In terms of the reliable function, dimensioning and durability of the device, it is important that the forces affecting the rotation of the shaft are minimal. Thus, it is preferred that the shaft is supported by the blowing box by means of a bearing 9. Preferably, the bearing is a slide bearing, by using which air leakage from the clearance of the shaft and the opening structurally required by the shaft in the side of the blowing box can be easily prevented. It is also preferred that the actuator is connected to the shaft essentially at the middle of its length, at a distance equal to at least a 1/3 portion of the shaft length, from both ends of the shaft. The actuator can be connected to the shaft, for example, by a belt, as in Figs. 3 and 4.

It is preferred that air is fed into the blowing box only from its one end. It is further preferred that the closing line formed by the shaft and the closing plates attached thereto is located at a distance equal to half the length of the blowing box that is equipped with blowing apertures from that end of the blowing box, from which air is fed into it.

In Figs. 2 - 4, the same blowing box has two closing lines formed by the shaft and the closing plate attached thereto, the location of which closing lines along the length of the blowing box is different. By increasing the number of closing lines from one, more steps for narrowing the blowing width are achieved. It is essential for the invention that there is at least one closing line.

The device of Figs. 1 - 5 is typically used as follows: When loading glasses to the loading table before the heating furnace, the loading width to be achieved is taken into account. Provided that this width is narrower than a narrowed blowing width to be temporarily selected, i.e. the distance WA or WB in Fig. 2, the blowing width is then narrowed by closing the blowing width of the blowing box by the closing plates, and the glass is positioned on the roller track such that it does not extend to the closed area of the blowing width.

Glasses can always also be loaded in the loading area to the edge on that side, from which air is discharged into the blowing boxes. In this case, the control system of the convection cooler closes the blowing width of the blowing box by the closing plates of the invention, if the width of the glasses does not extend to the closing plate. The control system receives information regarding the width of the glass, for example, from an automatic glass width measuring device. Such devices are generally known in the art. Such a device can be, for example, a row of capacitive sensors between the loading table and the heating furnace.

The invention can also be adapted to a convection cooler, in which the site of air supply to the blowing boxes is at the middle of their length. In this case as well, the blowing width can be narrowed with one closing line formed by the consecutive closing plates on the same shaft, when the glasses are loaded to the other edge of the blowing width as above. On the other hand, in this case, with two closing lines on different sides of the supply site, the glasses can be loaded to the middle area of the blowing width, which is preferred in some applications.

The advantage of removing unnecessary air blowing, i.e. that is directed to the width not occupied by glass in the convection cooler, is the energy savings. The input power of the blower motor decreases as the blowing length of the blowing box is closed, even though its rotational speed and further the rotational speed of the blower impeller remain the same. In this case, the blowing pressure in the open, i.e. blowing, length of the blowing boxes, increases as well. Narrowing the blowing area also enables a greater maximum blowing pressure, i.e. the cooling efficiency to be achieved with the convection cooler is increased. This is useful, for example, in the tempering of even thinner glasses. The temporary narrowing of blowing width by closing plates enables the tempering of an even thinner glass sheet. Obviously, the narrowing in this case decreases the maximum size of the glass or the glass load.

In a preferred method, the rise in blowing pressure created by the closing plate in the closed position along the length of the blowing box upstream of the closing plate is compensated for by decreasing the rotational speed of the blower. This decreases the input power of the blower motor even further, which increases energy savings. The required change in rotational speed can be made based on the data of a device measuring blowing pressure, i.e. air overpressure in the blowing boxes, or it can be calculated theoretically using blower equations. The achievable temporary decrease % of the blower motor input power is, at its maximum, equal to the temporary decrease % of the blowing width, i.e. in the case in Fig. 3, 100% x (WA/W) or 100% x (WB/W). The input power decrease % is reduced, when the closing apparatus leaks. Energy savings, for example, yearly energy savings, depend on e.g. the utilization rate of the convection cooler and the thickness of the glasses to be cooled.

It is preferred that the blowing pressure in the blowing boxes be decreased when changing the position of the closing plate. This increases the durability of the device, because, in this case, during the stage of changing position, it is not subject to sudden forces exerted on the closing plate by the pressure difference.

The energy savings to be achieved by the method are essentially affected by the structure of the device. A leak from the clearance of the closing plate and the inner surface of the blowing box decreases energy savings. Hence, the above-said leakage-decreasing structures disclosed in the description of the device are preferred solutions.

In the foregoing and in the claims, by glass is meant sheet-like glass, i.e. a glass sheet. A glass load can be composed of one glass, consecutive glasses and parallel glasses. In terms of the invention, by the width of a glass and the width of a glass load is meant the same thing.

## Claims

1. A device for decreasing the blowing width of a glass convection cooler, wherein the convection cooler comprises, on both sides of the glass (G), blowing boxes (2) that are consecutive in the direction of movement of the glass, from the blowing apertures (7) of which air is discharged towards the glass to be cooled, **characterized in that** the device includes several closing plates (5a, 5b) within the consecutive blowing boxes and attached to the same shaft (4), which is arranged to pass through the consecutive blowing boxes, by which the shaft is supported, and an actuator (12), with which the shaft can be rotated to prevent air from flowing into the end portion of the blowing boxes by the closing plates.

2. A device according to claim 1, **characterized in that** to the same shaft (4) are attached the closing plates (5a, 5b) of at least five consecutive blowing boxes (2).

3. A device according to claim 1, **characterized in that** to the same shaft (4) are attached the closing plates (5a, 5b) of at least ten consecutive blowing boxes (2).

4. A device according to any one of claims 1-3, wherein the shaft is arranged in relation to the closing plate such that it divides the shaft into sections (A1, A2) on different sides in relation to the shaft of the closing plate,
**characterized in that** the device is equipped with closing plate-specific sealing parts (6), against which the edges of the closing plate (5a, 5b) are pressed in the closed position, whereupon the closing plate section on the first side of the shaft presses against the sealing part from its opposite surface as the closing plate section on the other side of the shaft.

5. A device according to claim 4, **characterized in that** the surface area (A1) of the closing plate section on the first side of the shaft has a different size than the surface area (A2) of the closing plate section on the other side of the shaft, and that the closing plate section with the larger surface area presses against the sealing part from its surface on the side of the ending end (E) of the blowing box.

6. A device according to claims 4 and 5, **characterized in that** the surface areas (A1, A2) of the closing plate sections on the first side and the second side of the shaft are at least a 1/3 portion of the entire surface area (A1 + A2) of the closing plate.

7. A device according to any one of the preceding claims, **characterized in that** the shaft (4) is supported by the blowing boxes by means of a bearing (9).

8. A device according to any one of the preceding claims, **characterized in that** the actuator (12), with which the shaft is rotated, is connected to the shaft (4) at the middle of its length, i.e. at a distance equal to at least a 1/3 portion of the length of the shaft, from both ends of the shaft.

9. A device according to claim 1, **characterized in that** air is fed into the blowing box only from its one end, and the closing line formed by the shaft (4) and the closing plates (5a, 5b) attached thereto is located at a distance equal to at least half the length (W) of the blowing box that is equipped with blowing apertures from that end of the blowing box, to which air is fed.

10. A method for temporarily decreasing the blowing width of a glass convection cooler based on the width of the glass to be cooled, wherein in the convection cooler composed of, on both sides of the glass, blowing boxes (2) that are consecutive in the direction of movement of the glass, from the blowing apertures (7) of which air is discharged towards the glass to be cooled, the blowing width of several consecutive blowing boxes is closed by the closing plates (5a, 5b) attached to the same shaft by changing their position by rotating the shaft (4) passing through the consecutive blowing boxes.

11. A method according to claim 10, **characterized in that** the rise in blowing pressure created by the closing plate rotated into the closed position along the length of the blowing box upstream of the closing plate is compensated for by decreasing the rotational speed of the blower.

12. A method according to claim 10, **characterized in that** the blowing pressure in the blowing boxes is decreased when changing the position of the closing plate.
